# FASCICULE DE BREVET EUROPEEN

(11) **EP 3 400 622 B1**
(45) Date de publication et mention de la délivrance du brevet: **13.11.2019**
(21) Numéro de dépôt: 17700045.2
(22) Date de dépôt: 04.01.2017
(51) Int. Cl.: B66C 5/04, E04H 5/04, H01M 2/10

(54) **ABRI STATIONNAIRE DE STOCKAGE D'AU MOINS UNE UNITÉ DE STOCKAGE D'ÉNERGIE ÉLECTRIQUE**
STATIONÄRER SCHUTZRAUM ZUR AUFBEWAHRUNG VON MINDESTENS EINER STROMSPEICHEREINHEIT
STATIONARY SHELTER FOR STORING AT LEAST ONE ELECTRICAL ENERGY STORAGE UNIT

(30) Priorité: 05.01.2016 FR 1650050
(43) Date de publication de la demande: 14.11.2018
(73) Titulaire: Blue Solutions, 29500 Ergué Gabéric (FR)
(72) Inventeur: JOURDREN, Arnaud, 29500 Ergue Gaberic (FR); GOUZERH, Jean-Marc, 29000 Quimper (FR)
(74) Mandataire: Regimbeau
(86) Numéro de dépôt international: PCT/EP2017/050104
(87) Numéro de publication internationale: WO 2017/118644

(56) Documents cités:
- DE-U1- 9 305 524
- US-A- 4 126 232

## Description

### DOMAINE TECHNIQUE GENERAL

L'invention se situe dans le domaine des installations électriques autonomes et stationnaires, c'est-à-dire des installations fixes, qui couplent des moyens de production d'énergie, tel que des panneaux solaires ou des éoliennes par exemple, avec des unités de stockage de l'énergie électrique ainsi produite.

L'invention concerne plus particulièrement un abri stationnaire de stockage d'au moins une telle unité de stockage d'énergie électrique, cet abri contenant au moins un élément de réception de ladite unité et étant équipé d'un dispositif de levage et de manutention de cette unité.

### ETAT DE L'ART

Les installations électriques précitées sont destinées à être installées dans des zones reculées, difficiles d'accès, par exemple mais non exclusivement en Afrique.

Des "abris", connus sous la dénomination anglaise de "*shelters*", permettent de loger non seulement un ensemble d'unités de stockage d'énergie, mais également divers dispositifs assurant la gestion électronique de leur fonctionnement et de leur sécurité.

On connait ainsi des abris stationnaires de stockage d'au moins une unité de stockage d'énergie électrique, qui comprennent au moins un emplacement de réception de ladite unité, de préférence plusieurs superposés et/ou juxtaposés.

En pratique, l'introduction des unités de stockage dans l'abri stationnaire s'effectue comme suit. Lesdites unités sont transportées dans des caisses. Un transporteur décharge lesdites caisses à proximité de l'abri. Les caisses sont ouvertes, puis l'opérateur à l'aide d'un chariot élévateur manuel ou motorisé insère lesdites unités dans l'abri stationnaire.

Toutefois, cette opération nécessite d'amener un chariot élévateur à proximité de l'abri stationnaire et de prévoir autour de ce dernier une zone de chargement adaptée au chariot élévateur, en termes de nivellement du sol et de nature de celui-ci.

Lorsque l'abri de stockage est installé dans des zones d'accès difficile, il peut se trouver sur tout type de terrain, par exemple accidenté, caillouteux, il peut même être sur le sol à une hauteur différente de celle à laquelle se trouve le chariot élévateur. Dans ces différents cas, et en prenant également en compte les conditions météorologiques, la demanderesse a constaté que le chargement et le déchargement des unités de stockage d'énergie électrique dans et hors de l'abri de stockage peuvent s'avérer dangereux et très complexes.

En outre, il faut tenir compte du fait que ces unités peuvent être assez lourdes, par exemple de l'ordre de 300 kg à 400 kg, voire 500 kg.

On connaît déjà d'après le document DE 9305524 un abri stationnaire de stockage d'au moins une unité de stockage d'énergie électrique, qui comprend un dispositif de manutention de ladite unité, disposé à l'intérieur de l'abri. Toutefois, ce dispositif de manutention incluant une bande de transport est situé en partie basse de l'abri et non au-dessus de l'élément de réception situé le plus haut dans l'abri. En outre, il ne comprend pas de partie fixe solidaire d'une paroi intérieure de l'abri.

On connaît enfin d'après le document US 4 126 232 un abri stationnaire, muni d'un dispositif de levage et de manutention d'appareils de commutation dans des alvéoles situées à l'intérieur de l'abri. Ce dispositif de levage n'est toutefois pas solidaire d'une paroi intérieure de l'abri.

### PRESENTATION DE L'INVENTION

L'invention a donc pour but de résoudre les inconvénients précités de l'état de la technique et notamment de permettre un chargement ou un déchargement des unités de stockage d'énergie électrique dans et hors de l'abri, qui soit sécurisé pour l'opérateur, sans risques d'endommagements de cet unité ou de cet abri, et ce, même si le terrain situé autour de l'abri ne permet pas d'y amener un chariot élévateur.

L'invention a également pour but de simplifier ces opérations de manutention et de permettre leur mise en oeuvre avec peu d'outils et un seul opérateur.

A cet effet, l'invention concerne un abri stationnaire de stockage d'au moins une unité de stockage d'énergie électrique.

Conformément à l'invention, cet abri comprend au moins un élément de réception de ladite unité, conformé pour que ladite unité de stockage d'énergie électrique puisse y être insérée ou en être extraite, et ce, au travers d'une ouverture d'accès ménagée dans une paroi dudit abri stationnaire, ledit abri comprend un dispositif de levage et de manutention de ladite unité, ce dispositif de levage et de manutention est disposé à l'intérieur dudit abri, au-dessus de l'élément de réception situé le plus haut dans l'abri et le dispositif de levage et de manutention comprend une partie fixe solidaire d'au moins une paroi intérieure dudit abri et une partie mobile configurée pour pouvoir être déplacée entre une position dite escamotée, dans laquelle elle rentre complètement à l'intérieur dudit abri, et une position dite de travail, dans laquelle elle se trouve à l'extérieur dudit abri et dans laquelle elle permet le chargement et le déchargement d'une unité de stockage d'énergie électrique dans et hors de l'élément de réception.

Grâce à ces caractéristiques de l'invention, il n'est plus nécessaire d'avoir un chariot élévateur pour introduire les unités de stockage d'énergie électrique dans l'abri stationnaire.

Les caisses contenant les unités sont déposées devant l'abri et le dispositif de levage et de manutention intégré à l'intérieur de l'abri permet leur chargement et leur déchargement dans et hors de l'abri.

De plus, le dispositif de levage étant intégré dans l'abri, il est à la fois parfaitement adapté aux unités de stockage d'énergie électrique à manipuler et toujours disponible sur le site. Il n'y a plus de risque que l'utilisateur oublie le matériel de déchargement, ou ait un matériel non adapté.

Enfin, le dispositif de levage est protégé des intempéries puisqu'il est stocké à l'intérieur de l'abri pendant toute la période où il n'est pas utilisé.

Selon d'autres caractéristiques avantageuses et non limitatives de l'invention, prises seules ou en combinaison :
- ladite partie fixe comprend au moins un rail de guidage et ladite partie mobile comprend une potence coulissante, un palan, ou un treuil, et un outil d'accrochage de l'unité de stockage d'énergie électrique, ladite potence étant équipée de moyens de suspension du palan ou treuil et l'outil d'accrochage étant configuré pour pouvoir être fixé audit palan ou treuil, et ladite potence coulissante est configurée pour pouvoir se déplacer en translation par rapport audit rail de guidage entre la position escamotée et la position de travail ;
- la partie fixe du dispositif de levage comprend deux rails de guidage parallèles et la potence coulissante comprend deux coulisseaux parallèles, reliés entre eux par au moins une traverse, chaque coulisseau étant mobile en translation par rapport à l'un desdits rails de guidage et ladite traverse comprenant des moyens de suspension du palan ou treuil, tel qu'un anneau ou un crochet ;
- la partie fixe du dispositif de levage comprend deux rails de guidage parallèles, la potence coulissante comprend un arceau et deux coulisseaux parallèles, reliés entre eux par au moins une traverse, l'arceau comprenant des moyens de suspension du palan ou treuil, tel qu'un anneau ou un crochet, chaque coulisseau étant mobile en translation par rapport à l'un desdits rails de guidage, et chacune des deux extrémités de l'arceau est montée pivotante par rapport à l'un des coulisseaux de sorte que ledit arceau peut occuper une position de travail repliée, dans laquelle il s'étend dans un plan horizontal, et une position de travail déployée, dans laquelle il est incliné par rapport à l'horizontale, de façon à se trouver au-dessus du plan horizontal passant par lesdits deux coulisseaux ;
- le dispositif de levage et de manutention comprend des moyens d'immobilisation de l'arceau dans ladite position de travail déployée ;
- lesdits moyens d'immobilisation comportent au moins une béquille montée pivotante à l'une de ses deux extrémités par rapport à la traverse reliant entre eux lesdits deux coulisseaux, cette béquille étant munie à son autre extrémité de moyens de verrouillage sur l'arceau, et ladite béquille peut passer d'une position inactive dans laquelle elle ne coopère pas avec l'arceau, à une position active, dans laquelle elle est verrouillée avec l'arceau, de façon à maintenir celui-ci dans sa position de travail déployée ;
- la partie fixe du dispositif de levage comprend un rail de guidage et la potence coulissante comprend un coulisseau mobile en translation par rapport audit rail de guidage, ledit coulisseau comprenant des moyens de suspension du palan ou treuil, tel qu'un anneau ou un crochet ;
- ledit coulisseau comprend un élément mobile en translation, tel qu'un chariot, ou une portion de coulisseau télescopique, le palan ou treuil étant fixé à cet élément mobile en translation ;
- ledit outil d'accrochage de l'unité de stockage d'énergie électrique est un cadre muni en son centre d'un point de fixation au palan ou treuil et à ses quatre coins de moyens d'accrochage de ladite unité ;
- ledit outil d'accrochage de l'unité de stockage d'énergie électrique est une fourche munie à son extrémité supérieure d'un point de fixation au palan ou treuil ;
- la partie mobile du dispositif de levage et de manutention comprend des moyens de blocage en position de travail ;
- ledit au moins un élément de réception est coulissant, de sorte qu'il peut coulisser au travers de ladite ouverture d'accès entre une position rentrée à l'intérieur dudit abri et une position sortie à l'extérieur de celui-ci, et cet élément de réception coulissant est conformé pour que ladite unité de stockage d'énergie électrique puisse y être insérée ou en être extraite par le haut, lorsqu'il est en position sortie ;
- ledit au moins un élément de réception coulissant comprend des moyens de verrouillage en position sortie ;
- ledit au moins un élément de réception est fixe à l'intérieur de l'abri et est conformé pour que ladite unité de stockage d'énergie électrique puisse y être insérée ou en être extraite par son extrémité débouchant en regard de ladite ouverture d'accès ;
- ledit élément de réception comprend deux équerres parallèles disposées l'une en face de l'autre et à la même hauteur ; et
- lesdites équerres sont revêtues au moins en partie par une couche de matériau facilitant l'introduction et le coulissement de ladite unité dans ledit élément de réception.

### PRESENTATION DES FIGURES

D'autres caractéristiques et avantages de l'invention apparaîtront de la description qui va maintenant en être faite, en référence aux dessins annexés, qui en représentent, à titre indicatif mais non limitatif, des modes de réalisation possibles.

Sur ces dessins :
- la figure 1 est une vue en perspective représentant un abri stationnaire de stockage conforme à l'invention, équipé d'un dispositif de levage et de manutention,
- la figure 2 est une vue en perspective d'une structure de support comprenant le dispositif de levage et de manutention conforme à l'invention, cette structure de support étant représentée hors de l'abri stationnaire,
- la figure 3 est une vue similaire à la figure 2 mais représentant un autre mode de réalisation du dispositif de levage et de manutention,
- la figure 4 est une vue en perspective de la partie supérieure de la structure de support équipée d'une variante de réalisation du dispositif de levage et de manutention de la figure 2, et
- Les figures 5 et 6 sont des vues en perspective de deux modes de réalisation possibles des moyens de blocage du dispositif de levage et de manutention en position de travail.

### DESCRIPTION DETAILLEE

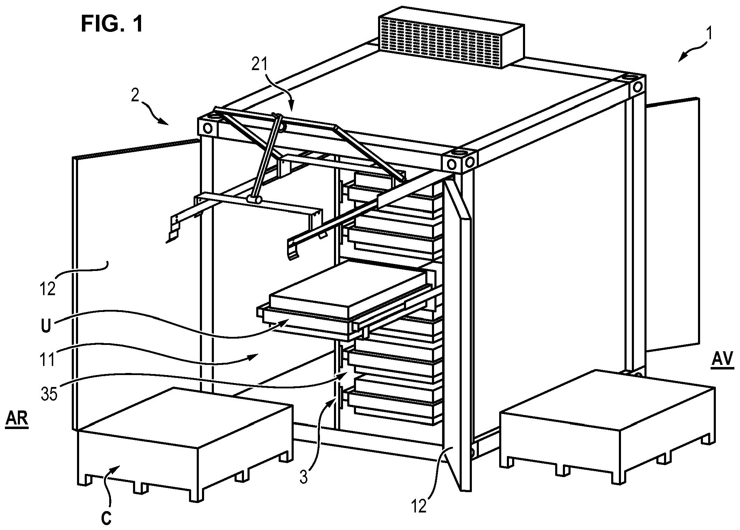

En se reportant à la figure 1, on peut voir un abri stationnaire de stockage 1 d'au moins une unité de stockage d'énergie électrique U, cet abri étant équipé d'un dispositif de levage et de manutention 2 de ladite unité.

Sans que cela soit limitatif, on notera que les unités de stockage d'énergie électrique U dont il est question dans la présente demande sont préférentiellement des batteries de stockage d'énergie électrique, du type LMP® (pour Lithium Métal Polymère) ou du type lithium ions, dont le poids est inférieur à 500 kg, de préférence de l'ordre de 300 kg à 400 kg.

Cet abri 1 est destiné, entre autres, à protéger les unités U des intempéries et à offrir une enceinte climatique stable.

L'abri de stockage 1 est dit "stationnaire", en ce sens qu'il repose sur le sol et n'est pas embarqué sur un véhicule mobile.

L'abri stationnaire 1 est une structure dont la forme générale est de préférence celle d'un parallélépipède cubique ou rectangle.

Les différentes parois de l'abri 1 délimitent ensemble une enceinte 10, à l'intérieur de laquelle est disposée une structure de support 3, destinée à recevoir au moins une unité de stockage d'énergie électrique U.

L'abri 1 présente une ouverture d'accès 11, obturée par au moins une porte, ici deux portes battantes, référencées 12.

Par convention, on dénomme avant AV, le côté de l'abri 1 par lequel un opérateur peut pénétrer, et arrière AR, le côté opposé, qui est également celui par lequel les unités U peuvent être introduites dans l'abri 1 ou en être extraites.

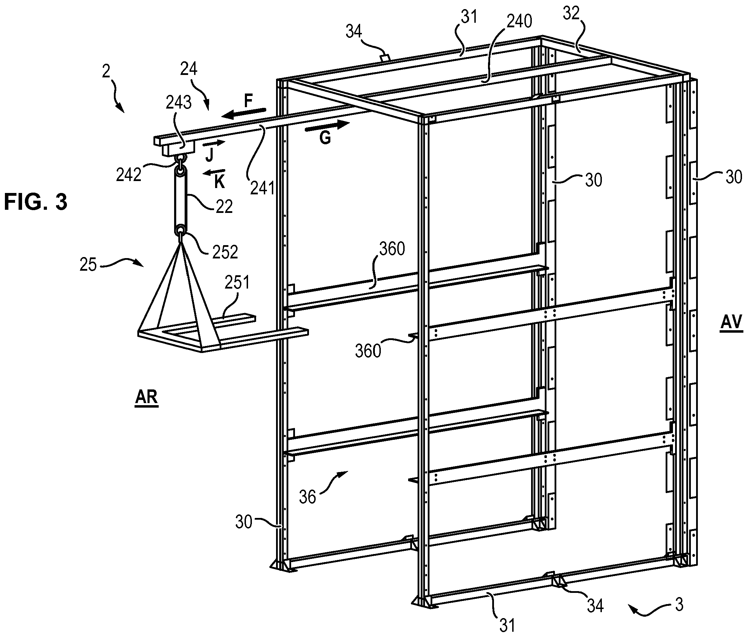

Un exemple de réalisation de la structure de support 3 va maintenant être décrit en liaison avec la figure 3. Cette structure 3 est réalisée par assemblage de plusieurs profilés, de préférence métalliques, qui définissent ensemble une structure ayant sensiblement la forme d'un parallélépipède rectangle.

Cette structure de support 3 est par exemple réalisée en assemblant quatre montants verticaux 30 avec une pluralité de longerons 31 et éventuellement des traverses 32.

Cette structure de support 3 est solidaire de l'abri 1 et elle est préférentiellement fixée sur la face intérieure d'une ou de plusieurs paroi(s) de celui-ci, par exemple à l'aide de pattes de fixation 34.

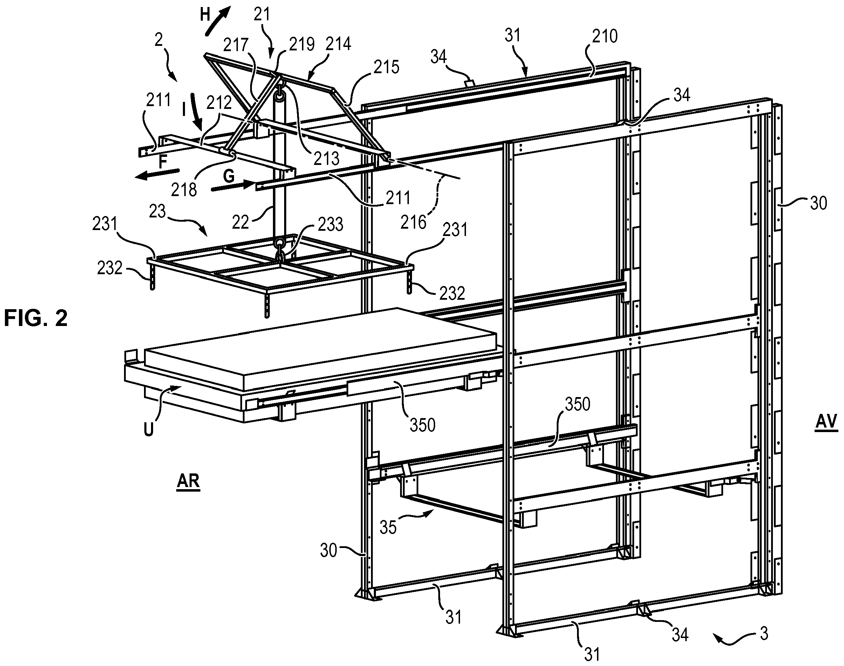

Selon un premier mode de réalisation de l'invention, représenté sur la figure 2, cette structure de support 3 comprend au moins un élément coulissant 35 de réception d'une unité de stockage d'énergie électrique U, et de préférence, plusieurs de ces éléments coulissants, superposés les uns sur les autres, comme on peut le voir sur la figure 2, voire juxtaposés, dans des variantes de réalisation non représentées sur les figures.

On notera que, lorsqu'il y a plusieurs colonnes d'éléments coulissants de réception 35 superposés, il y a un dispositif de levage et de manutention 2 au-dessus de chaque colonne.

Dans son mode de réalisation le plus simple, l'élément de réception coulissant 35 peut se présenter sous la forme de deux glissières 350, disposées à la même hauteur, l'une en face de l'autre, chaque glissière portant une équerre de support de ladite unité U. Ces glissières et équerres sont conformées pour que l'unité U puisse être insérée dans l'élément de réception coulissant 35 par le haut ou en être extraite par le haut, c'est-à-dire verticalement.

Dans des modes de réalisation plus élaborés, l'élément coulissant 35 peut se présenter sous la forme d'un berceau ou d'un tiroir ou de tout autre dispositif permettant la réception de l'unité U par le haut.

Quel que soit le mode de réalisation de l'élément coulissant 35, celui-ci peut coulisser au travers de l'ouverture d'accès 11 (visible sur la figure 1), entre une position dite "rentrée" à l'intérieur de l'abri 1, qui est celle représentée par exemple dans la partie supérieure ou la partie inférieure de la figure 1, et une position dite "sortie" à l'extérieur de l'abri 1, qui est celle représentée pour l'unité U placée au centre sur la figure 1.

L'élément coulissant 35 peut éventuellement comprendre des moyens de verrouillage en position sortie, tel qu'un loquet par exemple.

Selon un second mode de réalisation de l'invention, représenté sur la figure 3, la structure de support 3 comprend au moins un élément de réception 36 fixe, de préférence plusieurs éléments de réception 36 superposés (ou juxtaposés dans des variantes de réalisation non représentées). Chaque élément de réception 36 comprend par exemple deux équerres de support 360 parallèles, disposées de façon que leurs ailes horizontales soient situées à la même hauteur, l'une en face de l'autre, et espacées d'une distance correspondant au moins à la largeur de l'unité de stockage d'énergie électrique U.

Ces deux équerres 360 peuvent également être remplacées par exemple par une étagère ou par des rails de guidage fixes dans lesquels vient coulisser un organe de roulement (tel qu'un patin ou une roue), solidaire d'ailettes latérales de l'unité U. De façon avantageuse, les équerres 360 peuvent être revêtues au moins en partie d'une couche de matériau facilitant le glissement de l'unité U, tel qu'un matériau polymère à faible surface de frottement, par exemple du polytétrafluoroéthylène (ou PTFE). Cette couche de matériau peut également être disposée sous les ailettes latérales de l'unité U.

Dans ce second mode de réalisation de l'invention, l'unité U est alors insérée dans l'élément de réception 36 par coulissement horizontal sur les équerres 360, depuis l'arrière AR de l'abri vers l'avant AV, et en est extraite selon un mouvement inverse.

On notera également que la partie fixe de la glissière 350 (figure 2) ou les équerres 360 (figure 3) pourraient être fixées directement sur la face intérieure des parois de l'abri, sans structure de support 3.

Le dispositif de levage et de manutention 2 est disposé à l'intérieur de l'abri 1, au-dessus de l'élément de réception 35 ou 36 situé le plus haut dans l'abri, de façon à pouvoir charger une unité de stockage d'énergie électrique U dans celui-ci ou l'en décharger.

Par ailleurs, le dispositif de levage et de manutention 2 comprend une partie fixe solidaire de la paroi intérieure dudit abri et une partie mobile, configurée pour pouvoir être déplacée entre une position dite "escamotée", dans laquelle elle se trouve complètement à l'intérieur de l'abri 1, et une position dite "de travail", dans laquelle elle se trouve à l'extérieur de cet abri 1, de façon à permettre le chargement et le déchargement de l'unité U dans et hors de l'élément de réception 35, 36.

D'une manière générale, la partie mobile du dispositif de levage et de manutention 2 comprend une potence 21, 24 ou 26 suivant les modes de réalisation, un palan (ou un treuil) 22 et un outil d'accrochage 23 ou 25 de l'unité U.

Le palan ou le treuil 22 peut être manuel ou motorisé.

L'outil d'accrochage peut être un cadre de levage 23 (représenté sur la figure 2) ou une fourche 25 (représentée sur la figure 3).

Le cadre de levage 23 va maintenant être décrit plus en détails. Il présente préférentiellement à ses quatre coins 231 des chaînes ou crochets ou tiges 232, permettant d'accrocher quatre points d'une unité de stockage d'énergie électrique U et de la déplacer verticalement tout en la maintenant horizontalement. Ce cadre 23 est également muni en son centre d'un point de fixation 233 au palan 22, tel qu'un anneau.

La fourche 25, visible sur la figure 3, est munie de deux branches parallèles horizontales 251 susceptibles d'être glissées sous une unité de stockage d'énergie électrique U. Cette fourche 25 comprend également à sa partie supérieure un point de fixation 252 (tel qu'un crochet ou un anneau) audit palan ou treuil 22.

Le cadre 23 et la fourche 25 sont en outre conformés pour résister au déplacement de charges lourdes, de préférence inférieures à 500 kg environ, les unités U ayant généralement des poids compris entre 300 et 400 kg, comme mentionné précédemment.

On notera que le cadre de levage 23 est utilisé lorsque l'élément de réception est coulissant (élément 35) et que le chargement et/ou déchargement de l'unité U s'effectue par le dessus de cet élément 35.

Inversement, la fourche 25 est utilisée lorsque l'élément de réception est fixe (élément 36) et que le chargement et/ou déchargement de l'unité U s'effectue par l'arrière (côté AR) et horizontalement, c'est-à-dire par coulissement sur les équerres 360.

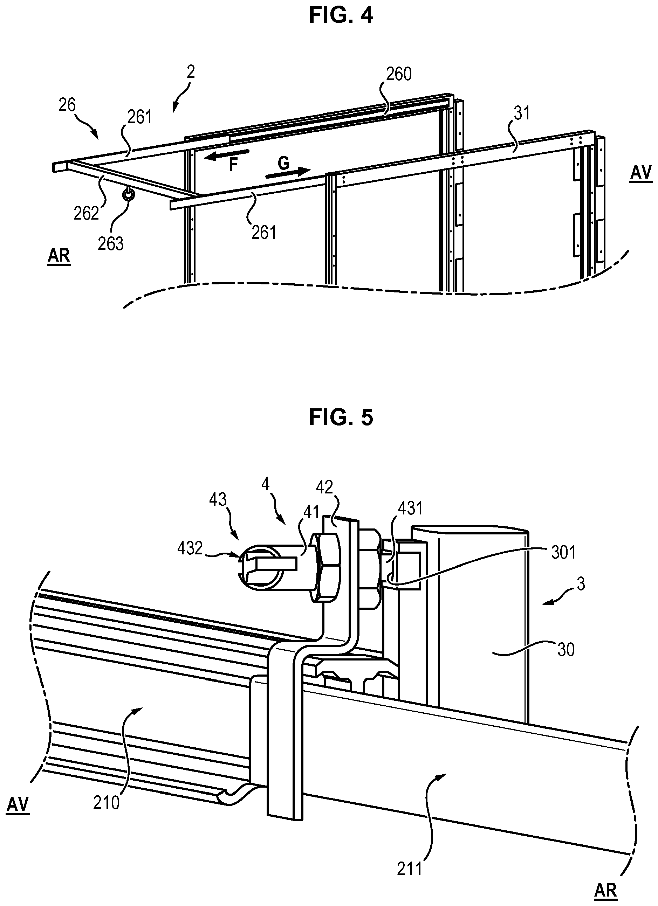

Un premier mode de réalisation du dispositif de levage et de manutention 2 va maintenant être décrit en liaison avec la figure 4.

La partie fixe du dispositif 2 comprend dans ce cas deux rails de guidage 260 fixés respectivement sur les faces intérieures se faisant face des deux longerons supérieurs 31 du dispositif de support 3.

La potence coulissante 26 comprend deux coulisseaux parallèles 261, reliés entre eux par au moins une traverse 262. Chaque coulisseau 261 est mobile en translation dans l'un des rails de guidage 260, de sorte que la potence 26 peut effectuer un déplacement en translation horizontale, dans les deux sens. La potence 26 peut adopter la position de travail représentée sur la figure 4 (flèche F) ou la position escamotée (flèche G), dans laquelle les coulisseaux 261 sont complètement logés dans les rails 260. En outre, la traverse est munie d'un moyen de suspension du palan ou treuil 22 (non représenté sur cette figure), tel qu'un anneau ou un crochet 263.

Un deuxième mode de réalisation du dispositif 2 va maintenant être décrit en liaison avec la figure 2.

Dans ce cas, la partie fixe du dispositif de levage 2 comprend deux rails de guidage parallèles 210 fixés respectivement sur les faces intérieures des deux longerons supérieurs 31 de la structure de support 3.

La potence coulissante 21 comprend deux coulisseaux parallèles 211, reliés entre eux par au moins une traverse 212, située de préférence à proximité de l'extrémité libre des deux coulisseaux, c'est-à-dire du côté arrière AR de l'abri 1.

Les coulisseaux 211 se déplacent dans les rails de guidage 210 (voir les flèches F et G).

La potence coulissante 21 comprend également un arceau 214. Dans l'exemple représenté sur la figure 2, cet arceau 214 présente la forme d'un U inversé. Cette forme n'est pas limitative. L'arceau 214 comprend en outre des moyens de suspension du palan ou du treuil 22, tels qu'un anneau ou un crochet 213, disposés de préférence en son centre. Chacune des deux extrémités 215 de l'arceau 214 est montée pivotante, autour d'un axe de pivotement 216 solidaire de l'un des coulisseaux 211.

De préférence, et comme représenté sur la figure 2, l'arceau 214 est monté de façon que ses deux extrémités 215 soient tournées vers l'avant AV de l'abri.

L'arceau 214 peut ainsi pivoter entre une position de travail repliée, dans laquelle il s'étend dans un plan horizontal (flèche I), et une position de travail déployée, représentée sur la figure 2 (flèche H), dans laquelle il est incliné par rapport à l'horizontale (du haut et de l'arrière vers le bas et l'avant sur la figure 2). Dans cette dernière position, l'anneau 213 porté par l'arceau 214 est surélevé, ce qui permet d'y accrocher plus facilement le palan 22 pour charger l'unité U dans l'élément de réception 35 le plus haut.

De façon avantageuse, l'arceau 214 est muni de moyens 217 d'immobilisation dans sa position de travail déployée.

Selon une variante de réalisation possible, ces moyens d'immobilisation 217 sont constitués d'au moins une béquille montée pivotante à l'une de ses deux extrémités (ici son extrémité orientée vers l'arrière AR de l'abri 1), par rapport à la traverse 212. Le pivotement s'effectue autour d'un axe 218 porté par la traverse 212.

Cette béquille 217 est munie, à son autre extrémité, de moyens de verrouillage 219 sur l'arceau 214, tels que par exemple un crochet ou un doigt coopérant avec un orifice ménagé dans l'arceau 214.

La béquille 217 peut être rabattue dans une position inactive dans laquelle elle ne coopère pas avec l'arceau 214. Elle peut aussi être déployée dans une position active, qui est celle représentée sur la figure 2, dans laquelle elle est verrouillée avec l'arceau 214, de façon à maintenir celui-ci dans sa position de travail déployée.

Un troisième mode de réalisation du dispositif de levage et de manutention 2 va maintenant être décrit en liaison avec la figure 3.

Dans ce cas, le dispositif 2 comprend un unique rail de guidage central 240 fixé par exemple entre deux traverses supérieures 32 de la structure de support 3, de façon que sa face de guidage soit orientée vers le bas.

Par ailleurs, la potence coulissante 24 comprend un coulisseau 241, mobile en translation par rapport audit rail 240 (flèches F et G), et ce coulisseau 241 comprend, à son extrémité libre, des moyens de suspension 242 du palan ou du treuil 22, tels qu'un anneau ou un crochet.

Selon une variante de réalisation qui est celle représentée sur la figure 3, le coulisseau 241 comprend également un élément mobile en translation 243, tel qu'un chariot, qui supporte alors le moyen de suspension 242 du palan ou du treuil. Bien que cela ne soit pas représenté sur les figures, ce chariot 243 pourrait également être remplacé par une portion télescopique du coulisseau 241.

Dans les différents modes de réalisation du dispositif de levage et de manutention 2 qui viennent d'être décrits, on notera que les rails de guidage fixes 210, 240, 260 pourraient être fixés directement sur la face interne des parois de l'abri et non sur la structure de support 3.

On notera que le fait que la partie fixe 210, 240, 260 soit « solidaire » de la paroi extérieure de l'abri 1 désigne d'une manière générale la liaison entre cette partie fixe et l'intérieur de l'abri 1, que cette liaison mécanique soit directe ou indirecte (par exemple par l'intermédiaire de la structure de support 3).

Par ailleurs, la partie mobile de chaque dispositif de levage et de manutention 2 peut comprendre des moyens de blocage en position de travail qui permettent de s'assurer que la potence reste immobile en translation pendant l'accrochage du palan 22, de l'outil d'accrochage 23, 25 et de l'unité U, puis ultérieurement pendant le mouvement de déplacement vertical de l'unité U.

Ces moyens de blocage peuvent être par exemple un doigt de verrouillage ou un levier pivotant.

Un premier mode de réalisation possible des moyens de blocage est représenté par exemple sur la figure 5.

Ces moyens de blocage référencés 4 comprennent un manchon tubulaire creux 41 biseauté, fixé à l'extrémité avant du coulisseau 211, par exemple à l'aide d'une patte de fixation 42. Le manchon 41 est perpendiculaire à la direction de déplacement du coulisseau 211.

Un doigt de verrouillage 43 comprenant une tige 431 munie d'une manette de manoeuvre 432 est inséré avec un léger jeu de coulissement et de pivotement dans le manchon 41. La tige 431 est montée dans le manchon 41 avec un ressort de rappel non visible.

La tige 431 peut ainsi être déplacée par l'opérateur entre une position « verrouillée », représentée sur la figure 5, dans laquelle elle pénètre dans un perçage 301 formé dans un montant arrière 30 en garantissant ainsi le blocage du coulisseau 211 dans la position de travail du dispositif 2 et une position « déverrouillée », non représentée, dans laquelle l'opérateur fait pivoter la tige 431 d'un quart de tour, de sorte que la manette 432 glisse le long du biseau du manchon 41 et que la tige 431 sort du perçage 301. Dans ce dernier cas, la partie mobile 21 du dispositif 2 est en position escamotée dans l'abri 1.

Le ressort tend à ramener la tige 431 en position verrouillée.

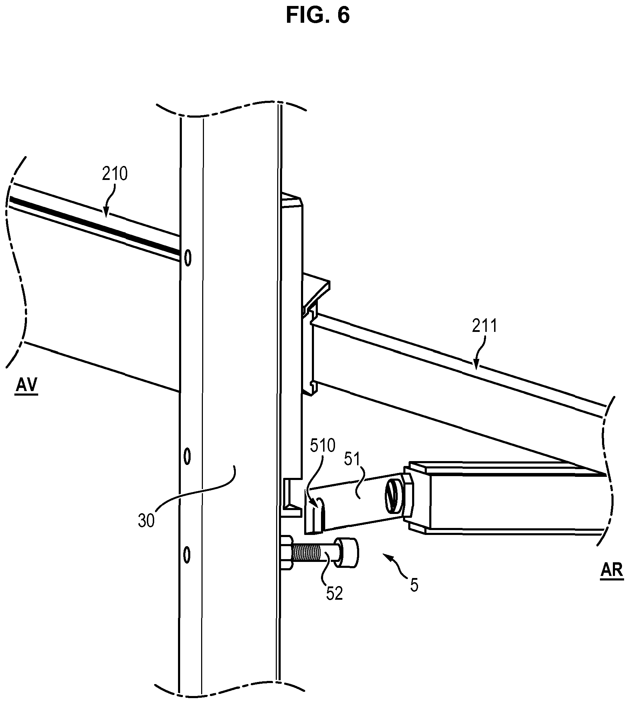

Un second mode de réalisation des moyens de blocage portant la référence 5 est représenté sur la figure 6.

Ces moyens 5 comprennent un levier pivotant 51 et un pion de verrouillage 52. Le pion de verrouillage 52 est fixé sur le montant 30 et le levier 51 est fixé à proximité de l'extrémité avant du coulisseau 211. Le levier pivotant 51 est muni d'une encoche 510 dans laquelle le pion 52 peut pénétrer.

En faisant pivoter manuellement le levier 51, l'opérateur peut l'accrocher sur le pion 52 et ainsi bloquer le coulisseau 211 du dispositif 2 en position de travail ou au contraire écarter le levier 51 du pion 52 et ainsi autoriser le déplacement du dispositif 2 en position escamotée.

D'autres modes de réalisation des moyens de blocage sont envisageables sans pour autant sortir du cadre de l'invention.

Dans les modes de réalisation précédemment décrits, un montage inversé est également possible, c'est-à-dire le doigt de verrouillage 43 ou le levier 51 sur le support 3 et le perçage 301 ou le pion 52 sur le coulisseau 211.

Enfin, ce qui a été décrit avec le coulisseau 211 peut être envisagé avec les coulisseaux 241 ou 261.

Le procédé de chargement d'une unité de stockage d'énergie électrique U à l'intérieur de l'abri 1 est le suivant.

L'opérateur dépose la caisse C (voir figure 1) contenant l'unité de stockage d'énergie électrique U à l'aide d'un outillage approprié devant l'abri 1. Il ouvre la caisse C et arrime l'outil d'accrochage 23 ou 25 à l'unité U. Il fait coulisser la potence mobile 21, 24, 26 hors de l'abri 1, y accroche le palan ou treuil 22 et déplace la potence de façon à l'amener au-dessus de l'unité U. Il accroche ensuite le palan, ou le treuil 22, à l'outil d'accrochage 23, 25 précité. Si nécessaire, l'opérateur déplace le chariot 243 vers l'avant AV (flèche J) ou vers l'arrière AR (flèche K).

L'opérateur peut ensuite en agissant sur le palan ou treuil 22 soulever l'unité U et la déplacer pour l'insérer dans l'élément de réception, soit par le dessus, soit par son extrémité arrière. Il peut alors détacher l'outil 23, 25 de l'unité U et ranger à l'intérieur de l'abri 1 le dispositif de levage et de manutention 2.

Ce dispositif 2 est toujours à poste. Une seule personne suffit pour effectuer cette manoeuvre. De plus, d'un point de vue de la sécurité, il n'y a plus de risque lié à l'état de la zone de chargement qui s'étend autour de l'abri.

## Revendications

1. Abri stationnaire (1) de stockage d'au moins une unité de stockage d'énergie électrique (U), ledit abri (1) comprenant au moins un élément (35, 36) de réception de ladite unité, conformé pour que ladite unité de stockage d'énergie électrique (U) puisse y être insérée ou en être extraite, et ce, au travers d'une ouverture d'accès (11) ménagée dans une paroi dudit abri stationnaire (1), ledit abri (1) comprenant en outre un dispositif de levage et de manutention (2) de ladite unité (U), ledit abri (1) étant **caractérisé en ce que** ce dispositif de levage et de manutention (2) est disposé à l'intérieur dudit abri (1), au-dessus de l'élément de réception (35, 36) situé le plus haut dans l'abri (1) et **en ce que** le dispositif de levage et de manutention (2) comprend une partie fixe (210, 240, 260) solidaire d'au moins une paroi intérieure dudit abri (1) et une partie mobile (21, 22, 23, 24, 25, 26) configurée pour pouvoir être déplacée entre une position dite escamotée, dans laquelle elle rentre complètement à l'intérieur dudit abri (1), et une position dite de travail, dans laquelle elle se trouve à l'extérieur dudit abri (1) et dans laquelle elle permet le chargement et le déchargement d'une unité de stockage d'énergie électrique (U) dans et hors de l'élément de réception (35, 36).

2. Abri (1) selon la revendication 1, **caractérisé en ce que** ladite partie fixe comprend au moins un rail de guidage (210, 240, 260), **en ce que** ladite partie mobile comprend une potence coulissante (21, 24, 26), un palan (22), ou un treuil, et un outil d'accrochage (23, 25) de l'unité de stockage d'énergie électrique (U), ladite potence (21, 24, 26) étant équipée de moyens de suspension (213, 242, 263) du palan ou treuil (22) et l'outil d'accrochage (23, 25) étant configuré pour pouvoir être fixé audit palan ou treuil (22), et **en ce que** ladite potence coulissante (21, 24, 26) est configurée pour pouvoir se déplacer en translation par rapport audit rail de guidage (210, 240, 260) entre la position escamotée et la position de travail.

3. Abri (1) selon la revendication 2, **caractérisé en ce que** la partie fixe du dispositif de levage (2) comprend deux rails de guidage parallèles (260) et **en ce que** la potence coulissante (26) comprend deux coulisseaux parallèles (261), reliés entre eux par au moins une traverse (262), chaque coulisseau (261) étant mobile en translation par rapport à l'un desdits rails de guidage (260) et ladite traverse (262) comprenant des moyens de suspension du palan ou treuil (22), tel qu'un anneau ou un crochet (263).

4. Abri (1) selon la revendication 2, **caractérisé en ce que** la partie fixe du dispositif de levage (2) comprend deux rails de guidage parallèles (210), **en ce que** la potence coulissante (21) comprend un arceau (214) et deux coulisseaux parallèles (211), reliés entre eux par au moins une traverse (212), l'arceau (214) comprenant des moyens de suspension du palan ou treuil (22), tel qu'un anneau ou un crochet (213), chaque coulisseau (211) étant mobile en translation par rapport à l'un desdits rails de guidage (210), et **en ce que** chacune des deux extrémités (215) de l'arceau (214) est montée pivotante par rapport à l'un des coulisseaux (211) de sorte que ledit arceau (214) peut occuper une position de travail repliée, dans laquelle il s'étend dans un plan horizontal, et une position de travail déployée, dans laquelle il est incliné par rapport à l'horizontale, de façon à se trouver au-dessus du plan horizontal passant par lesdits deux coulisseaux (211).

5. Abri (1) selon la revendication 4, **caractérisé en ce que** le dispositif de levage et de manutention (2) comprend des moyens d'immobilisation (217) de l'arceau (214) dans ladite position de travail déployée.

6. Abri selon la revendication 5, **caractérisé en ce que** lesdits moyens d'immobilisation comportent au moins une béquille (217) montée pivotante à l'une de ses deux extrémités par rapport à la traverse (212) reliant entre eux lesdits deux coulisseaux (211), cette béquille (217) étant munie à son autre extrémité de moyens de verrouillage (219) sur l'arceau (214), et **en ce que** ladite béquille (217) peut passer d'une position inactive dans laquelle elle ne coopère pas avec l'arceau (214), à une position active, dans laquelle elle est verrouillée avec l'arceau (214), de façon à maintenir celui-ci dans sa position de travail déployée.

7. Abri (1) selon la revendication 2, **caractérisé en ce que** la partie fixe du dispositif de levage (2) comprend un rail de guidage (240) et **en ce que** la potence coulissante (24) comprend un coulisseau mobile (241) en translation par rapport audit rail de guidage (240), ledit coulisseau (241) comprenant des moyens de suspension (242) du palan ou treuil (22), tel qu'un anneau ou un crochet.

8. Abri (1) selon la revendication 7, **caractérisé en ce que** ledit coulisseau (241) comprend un élément mobile en translation (243), tel qu'un chariot, ou une portion de coulisseau télescopique, le palan ou treuil (22) étant fixé à cet élément mobile en translation (243).

9. Abri (1) selon l'une des revendications 2 à 8, **caractérisé en ce que** ledit outil d'accrochage de l'unité de stockage d'énergie électrique (U) est un cadre (23) muni en son centre d'un point de fixation (233) au palan (22) ou treuil et à ses quatre coins (231) de moyens d'accrochage (232) de ladite unité (U).

10. Abri (1) selon l'une des revendications 2 à 8, **caractérisé en ce que** ledit outil d'accrochage de l'unité de stockage d'énergie électique (U) est une fourche (25) munie à son extrémité supérieure d'un point de fixation (252) au palan (22) ou treuil.

11. Abri (1) selon l'une des revendications précédentes, **caractérisé en ce que** la partie mobile du dispositif de levage et de manutention (2) comprend des moyens de blocage en position de travail.

12. Abri (1) selon l'une des revendications précédentes, **caractérisé en ce que** ledit au moins un élément (35) de réception est coulissant, de sorte qu'il peut coulisser au travers de ladite ouverture d'accès (11) entre une position rentrée à l'intérieur dudit abri (1) et une position sortie à l'extérieur de celui-ci, et **en ce que** cet élément (35) de réception coulissant est conformé pour que ladite unité de stockage d'énergie électrique (U) puisse y être insérée ou en être extraite par le haut, lorsqu'il est en position sortie.

13. Abri (1) selon la revendication 12, **caractérisé en ce que** ledit au moins un élément de réception coulissant (35) comprend des moyens de verrouillage en position sortie.

14. Abri (1) selon une des revendications 1 à 11, **caractérisé en ce que** ledit au moins un élément (36) de réception est fixe à l'intérieur de l'abri (1) et est conformé pour que ladite unité de stockage d'énergie électrique (U) puisse y être insérée ou en être extraite par son extrémité débouchant en regard de ladite ouverture d'accès (11).

15. Abri (1) selon la revendication 14, **caractérisé en ce que** ledit élément (36) de réception comprend deux équerres (360) parallèles disposées l'une en face de l'autre et à la même hauteur.

16. Abri (1) selon la revendication 15, **caractérisé en ce que** lesdites équerres (360) sont revêtues au moins en partie par une couche de matériau facilitant l'introduction et le coulissement de ladite unité (U) dans ledit élément de réception (36).

## Patentansprüche

1. Stationäres Schutzgehäuse (1) zum Unterbringen zumindest einer Speichereinheit für elektrische Energie (U), wobei das Schutzgehäuse (1) zumindest ein Element (35, 36) zur Aufnahme der Einheit umfasst, das so gestaltet ist, dass die Speichereinheit für elektrische Energie (U) darin eingesetzt oder daraus entnommen werden kann, und dies durch eine Zugangsöffnung (11), die in einer Wand des stationären Schutzgehäuses (1) gestaltet ist, wobei das Schutzgehäuse (1) ferner eine Hub- und Handhabungsvorrichtung (2) der Einheit (U) umfasst, wobei das Schutzgehäuse (1) **dadurch gekennzeichnet ist, dass** die Hub- und Handhabungsvorrichtung (2) im Innern des Schutzgehäuses (1) oberhalb des Aufnahmeelements (35, 36), angeordnet ist, das im Schutzgehäuse (1) zuoberst angeordnet ist, und dass die Hub- und Handhabungsvorrichtung (2) einen feststehenden Teil (210, 240, 260) umfasst, der mit zumindest einer Innenwand des Schutzgehäuses (1) fest verbunden ist, und einen beweglichen Teil (21, 22, 23, 24, 25, 26), der so konfiguriert ist, dass er zwischen einer sogenannten eingefahrenen Stellung, in der er vollständig in das Schutzgehäuse (1) eintritt, und einer sogenannten Arbeitsstellung bewegt werden kann, in der er sich außerhalb des Schutzgehäuses (1) befindet, und in der er das Be- und Entladen einer Speichereinheit für elektrische Energie (U) in das und aus dem Aufnahmeelement (35, 36) ermöglicht.

2. Schutzgehäuse (1) nach Anspruch 1, **dadurch gekennzeichnet, dass** der feststehende Teil zumindest eine Führungsschiene (210, 240, 260) umfasst, dass der bewegliche Teil einen Gleitarm (21, 24, 26), einen Hebezug (22) oder eine Winde und ein Fangwerkzeug (23, 25) für die Speichereinheit für elektrische Energie (U) umfasst, der Gleitarm (21, 24, 26) mit Aufhängungsmitteln (213, 242, 263) des Hebezugs oder der Winde (22) ausgestattet ist, und das Fangwerkzeug (23, 25) so konfiguriert ist, dass es am Hebezug oder der Winde (22) befestigt werden kann, und dass der Gleitarm (21, 24, 26) so konfiguriert ist, dass er sich in Translation in Bezug auf die Führungsschiene (210, 240, 260) zwischen der eingefahrenen Stellung und der Arbeitsstellung verschoben werden kann.

3. Schutzgehäuse (1) nach Anspruch 2, **dadurch gekennzeichnet, dass** der feststehende Teil der Hubvorrichtung (2) zwei parallele Führungsschienen (260) umfasst, und dass der Gleitarm (26) zwei parallele Schlitten (261) umfasst, die durch zumindest eine Querstange (262) miteinander verbunden sind, wobei jeder Schlitten (261) in Translation in Bezug auf eine der Führungsschienen (260) beweglich ist und die Querstange (262) Aufhängungsmittel für den Hebezug oder die Winde (22) umfasst, wie beispielsweise einen Ring oder einen Haken (263).

4. Schutzgehäuse (1) nach Anspruch 2, **dadurch gekennzeichnet, dass** der feststehende Teil der Hubvorrichtung (2) zwei parallele Führungsschienen (210) umfasst, dass der Schiebearm (21) einen Bügel (214) und zwei parallele Schlitten (211) umfasst, die durch zumindest eine Querstrebe (212) miteinander verbunden sind, wobei der Bügel (214) Aufhängungsmittel für den Hebezug oder die Winde (22), wie beispielsweise einen Ring oder einen Haken (213), umfasst, wobei jeder Schlitten (211) in Translation in Bezug auf eine der Führungsschienen (210) verschiebbar ist, und dass jedes der beiden Enden (215) des Bügels (214) in Bezug auf einen der Schlitten (211) schwenkbar montiert ist, so dass der Bügel (214) eine eingefahrene Arbeitsstellung einnehmen kann, in der er sich in einer horizontalen Ebene erstreckt, und eine ausgefahrene Arbeitsstellung, in der er in Bezug auf die horizontale Ebene geneigt ist, so dass er sich oberhalb der horizontalen Ebene befindet und durch die beiden Schlitten (211) geht.

5. Schutzgehäuse (1) nach Anspruch 4, **dadurch gekennzeichnet, dass** die Hub- und Handhabungsvorrichtung (2) Mittel zum Feststellen (217) des Bügels (214) in der ausgefahrenen Arbeitsstellung umfasst.

6. Schutzgehäuse nach Anspruch 5, **dadurch gekennzeichnet, dass** die Feststellmittel zumindest eine Stütze (217) umfassen, die an einem ihrer beiden Enden in Bezug auf die Querstange (212), die die beiden Schlitten (211) miteinander verbindet, schwenkbar montiert ist, wobei die Stütze (217) an ihrem anderen Ende mit Verriegelungsmitteln (219) am Bügel (214) versehen ist, und dass die Stütze (217) von einer inaktiven Stellung, in der sie nicht mit dem Bügel (214) zusammenwirkt, in eine aktive Stellung übergehen kann, in der sie mit dem Bügel (214) verriegelt ist, um ihn in seiner ausgefahrenen Arbeitsstellung zu halten.

7. Schutzgehäuse (1) nach Anspruch 2, **dadurch gekennzeichnet, dass** der feststehende Teil der Hubvorrichtung (2) eine Führungsschiene (240) umfasst, und dass der Gleitarm (24) einen beweglichen Schlitten (241) umfasst, der in Translation in Bezug auf die Führungsschiene (240) verschiebbar ist, wobei der Schlitten (241) Aufhängungsmittel (242) für den Hebezug oder die Winde (22) umfasst, wie beispielsweise einen Ring oder einen Haken.

8. Schutzgehäuse (1) nach Anspruch 7, **dadurch gekennzeichnet, dass** der Schlitten (241) ein in Translation bewegliches Element (243) umfasst, wie beispielsweise einen Schlitten, oder einen Abschnitt eines Teleskopschlittens, wobei der Hebezug oder die Winde (22) an diesem in Translation beweglichen Element (243) befestigt ist.

9. Schutzgehäuse (1) nach einem der Ansprüche 2 bis 8, **dadurch gekennzeichnet, dass** das Fangwerkzeug der Speichereinheit für elektrische Energie (U) ein Rahmen (23) ist, der in seiner Mitte mit einem Befestigungspunkt (233) am Hebezug (22) oder an der Winde und an seinen vier Ecken (231) mit Mitteln zur Befestigung (232) der Einheit (U) versehen ist.

10. Schutzgehäuse (1) nach einem der Ansprüche 2 bis 8, **dadurch gekennzeichnet, dass** das Fangwerkzeug der Speichereinheit für elektrische Energie (U) eine Gabel (25) ist, die an ihrem oberen Ende mit einem Befestigungspunkt (252) am Hebezug (22) oder der Winde versehen ist.

11. Schutzgehäuse (1) nach einem der Ansprüche, **dadurch gekennzeichnet, dass** der bewegliche Teil der Hub- und Handhabungsvorrichtung (2) Mittel zum Sperren in der Arbeitsstellung umfasst.

12. Schutzgehäuse (1) nach einem der Ansprüche, **dadurch gekennzeichnet, dass** das zumindest eine Aufnahmeelement (35) verschiebbar ist, so dass es durch die Zugangsöffnung (11) zwischen einer eingefahrenen Stellung im Innern des Schutzgehäuses (1) und einer ausgefahrenen Stellung außerhalb desselben gleiten kann, und dass das gleitende Aufnahmeelement (35) so gestaltet ist, dass die Speichereinheit für elektrische Energie (U) in dieses eingesetzt oder von oben entnommen werden kann, wenn es sich in der ausgefahrenen Stellung befindet.

13. Schutzgehäuse (1) nach Anspruch 12, **dadurch gekennzeichnet, dass** das zumindest eine gleitende Aufnahmeelement (35) Mittel zum Sperren in ausgefahrener Stellung umfasst.

14. Schutzgehäuse (1) nach einem der Ansprüche 1 bis 11, **dadurch gekennzeichnet, dass** das zumindest eine Aufnahmeelement (36) im Innern des Schutzgehäuses (1) befestigt und so gestaltet ist, dass die Speichereinheit für elektrische Energie (U) durch ihr gegenüber der Zugangsöffnung (11) mündendes Ende hindurch in ihn eingesetzt oder aus ihm entnommen werden kann.

15. Schutzgehäuse (1) nach Anspruch 14, **dadurch gekennzeichnet, dass** das Aufnahmeelement (36) zwei parallele Winkel (360) umfasst, die einander gegenüberliegend und in gleicher Höhe angeordnet sind.

16. Schutzgehäuse (1) nach Anspruch 15, **dadurch gekennzeichnet, dass** die Winkel (360) zumindest teilweise mit einer Materialschicht beschichtet sind, die das Einsetzen und Gleiten der Einheit (U) in das Aufnahmeelement (36) erleichtert.

## Claims

1. A stationary shelter (1) for storing at least one electrical energy storage unit (U), said shelter (1) comprising at least one element (35, 36) for receiving said unit, shaped so that said electrical energy storage unit (U) can be inserted therein or extracted therefrom, and this through an access opening (11) formed in a wall of said stationary shelter (1), said shelter (1) further comprising a device (2) for lifting and handling said unit (U), said shelter (1) being **characterized in that** this lifting and handling device (2) is disposed inside said shelter (1), above the receiving element (35, 36) located uppermost in the shelter (1) and **in that** the lifting and handling device (2) comprises a fixed part (210, 240, 260) secured to least one inner wall of said shelter (1) and one movable part (21, 22, 23, 24, 25, 26) configured to be moved between a position called stowed position, in which it fits completely inside said shelter (1), and a position called working position, in which it is located outside said shelter (1) and in which it allows the loading and unloading of an electrical energy storage unit (U) in and out of the receiving element (35, 36).

2. The shelter (1) according to claim 1, **characterized in that** said fixed part comprises at least one guide rail (210, 240, 260), **in that** said movable part comprises a sliding gallows (21, 24, 26), a hoist (22), or a winch, and a tool (23, 25) for hooking the electrical energy storage unit (U), said gallows (21, 24, 26) being equipped with means (213, 242, 263) for suspending the hoist or winch (22) and the hooking tool (23, 25) being configured to be attached to said hoist or winch (22), and **in that** said sliding gallows (21, 24, 26) is configured to move in translation with respect to said guide rail (210, 240, 260) between the stowed position and the working position.

3. The shelter (1) according to claim 2, **characterized in that** the fixed part of the lifting device (2) comprises two parallel guide rails (260) and **in that** the sliding gallows (26) comprises two parallel sliders (261), connected together by at least one cross-member (262), each slider (261) being movable in translation with respect to one of said guide rails (260) and said cross-member (262) comprising means for suspending the hoist or winch (22), such as a ring or a hook (263).

4. The shelter (1) according to claim 2, **characterized in that** the fixed part of the lifting device (2) comprises two parallel guide rails (210), **in that** the sliding gallows (21) comprises a hoop (214) and two parallel sliders (211), connected together by at least one cross-member (212), the hoop (214) comprising means for suspending the hoist or winch (22), such as a ring or a hook (213), each slider (211) being movable in translation with respect to one of said guide rails (210), and **in that** each of the two ends (215) of the hoop (214) is pivotally mounted relative to one of the sliders (211) so that said hoop (214) can occupy a folded working position, in which it extends in a horizontal plane, and a deployed working position, in which it is inclined relative to the horizontal, so as to be above the horizontal plane passing through said two sliders (211).

5. The shelter (1) according to claim 4, **characterized in that** the lifting and handling device (2) comprises means (217) for immobilizing the hoop (214) in said deployed working position.

6. The shelter according to claim 5, **characterized in that** said immobilizing means include at least one strut (217) pivotally mounted at one of its two ends relative to the cross-member (212) connecting therebetween said two sliders (211), this strut (217) being provided at its other end with locking means (219) on the hoop (214), and **in that** said strut (217) can switch from an inactive position in which it does not cooperate with the hoop (214) to an active position in which it is locked with the hoop (214), so as to maintain it in its deployed working position.

7. The shelter (1) according to claim 2, **characterized in that** the fixed part of the lifting device (2) comprises a guide rail (240) and **in that** the sliding gallows (24) comprises a slider (241) movable in translation with respect to said guide rail (240), said slider (241) comprising means (242) for suspending the hoist or winch (22), such as a ring or a hook.

8. The shelter (1) according to claim 7, **characterized in that** said slider (241) comprises an element movable in translation (243), such as a truck, or a portion of a telescopic slider, the hoist or winch (22) being attached to this element movable in translation (243).

9. The shelter (1) according to any of claims 2 to 8, **characterized in that** said tool for hooking the electrical energy storage unit (U) is a frame (23) provided, at its center, with a point (233) of attachment to the hoist (22) or winch and, at its four corners (231), with means (232) for hooking said unit (U) .

10. The shelter (1) according to any of claims 2 to 8, **characterized in that** said tool for hooking the electrical energy storage unit (U) is a fork (25) provided at its upper end with a point (252) of attachment to the hoist (22) or winch.

11. The shelter (1) according to any of the preceding claims, **characterized in that** the movable part of the lifting and handling device (2) comprises blocking means in the working position.

12. The shelter (1) according to any of the preceding claims, **characterized in that** said at least one receiving element (35) is slidable, so it can slide through said access opening (11) between a retracted position inside said shelter (1) and an extended position thereoutside, and **in that** this sliding receiving element (35) is shaped so that said electrical energy storage unit (U) can be inserted therein or extracted therefrom through the top, when it is in the extended position.

13. The shelter (1) according to claim 12, **characterized in that** said at least one sliding receiving element (35) comprises locking means in the extended position.

14. The shelter (1) according to any of claims 1 to 11, **characterized in that** said at least one receiving element (36) is attached inside the shelter (1) and is shaped so that said electrical energy storage unit (U) can be inserted therein or extracted therefrom through its end opening facing said access opening (11).

15. The shelter (1) according to claim 14, **characterized in that** said receiving element (36) comprises two parallel brackets (360) disposed facing each other and at the same height.

16. The shelter (1) according to claim 15, **characterized in that** said brackets (360) are coated at least partly with a layer of material facilitating the introduction and the sliding of said unit (U) in said receiving element (36).
